# EUROPEAN PATENT SPECIFICATION

(11) **EP 2 747 362 B1**
(45) Date of publication and mention of the grant of the patent: **20.02.2019**
(21) Application number: 12198920.6
(22) Date of filing: 21.12.2012
(51) Int. Cl.: H04L 29/06, G06F 21/35, H04W 4/80, H04W 12/06

(54) **Two factor authentication using near field communications**
Zweifaktorenauthentifizierung unter Verwendung von Nahfeldkommunikationen
Authentification à deux facteurs utilisant des communications en champ proche

(43) Date of publication of application: 25.06.2014
(73) Proprietor: Certicom Corp., Mississauga, Ontario L4W 0B5 (CA)
(72) Inventor: Rosati, Anthony, Ottawa, Ontario, K1S 4T5 (CA)
(74) Representative: Hanna Moore + Curley

(56) References cited:
- US-A1- 2009 143 104
- US-A1- 2011 130 120
- US-A1- 2012 178 366
- US-A1- 2012 185 697
- US-A1- 2012 295 587
- Anonymous: "Applet - Wikipedia, the free encyclopedia", , 28 November 2012 (2012-11-28), XP055288698, Retrieved from the Internet: URL:https://en.wikipedia.org/w/index.php?t itle=Applet&oldid=525348672 [retrieved on 2016-07-14]

## Description

### FIELD OF THE DISCLOSURE

The present disclosure relates to a communications device equipped with near field communications capabilities and applications related thereto.

### BACKGROUND

Two factor authentication is one technique used to ensure access is only granted to authorized users. In two factor authentication, a user is required to provide two authentication parameters. For example, one parameter might be a password or a PIN known to the user and to the authentication server or computing device.

A second factor might be a dynamic credential. For example, a user might be required to carry a key fob or other device having a display which provides a fixed length number. The number might change periodically such as every 60 seconds. The algorithm used to generate the dynamic credential is known to both the key fob and the authentication server or computing device, and thus if the same seed, such as a current time, is used, the number should match in both locations. The current time may be based on a mutually known time, such as a network time received from a network element, a clock on a device that is periodically synchronized, the exchange of the current time between a reader and a device, among other possibilities.

Currently a user must input the number that is seen on the key fob for the second factor of the two factor authentication. The entering of a number is both cumbersome and prone to errors.

Other examples of two factor authentication also exist. For example, challenge response tokens may have a host send a random challenge and the token perform some computation based on a secret key to generate a response. The host has related knowledge of the secret key and can thus verify the response. Similar to time based tokens, the response must be entered, which is again cumbersome and prone to error.

US 2012/295587 to Paya et al. describes a system whereby a mobile device receives a request from a client computer and responds to the request according to personal security preferences stored on the mobile device. The response to the request may include security credentials.

US 2012/185697 to Buer describes a universal token which stores security credentials from a plurality of sources, and provides an appropriate security token upon receiving a request from an application.

### SUMMARY

Accordingly the present teaching provides a method at a short range communications capable device for providing a dynamic credential to a terminal in accordance with claim 1. Advantageous features are defined in the dependent claims.

Accordingly the present teaching provides a short range communications capable device in accordance with claim 11.

### BRIEF DESCRIPTION OF THE DRAWINGS

The present application will be better understood with reference to the drawings, in which:
**Figure 1** is a block diagram of a mobile device and an NFC reader in accordance with the present disclosure.
**Figure 2** is a block diagram of NFC components within a mobile device in accordance with the present disclosure.
**Figure 3** is a flow diagram of an authentication procedure over NFC in accordance with the present disclosure.
**Figure 4** is a flow diagram of a method for receiving a dynamic credential from the perspective of an NFC reader in accordance with the present disclosure.
**Figure 5** is a flow diagram of a method for sending a dynamic credential from the perspective of an NFC device in accordance with the present disclosure.
**Figure 6** is a data flow diagram showing an embodiment for providing keys between an NFC reader and an NFC device.
**Figure 7** is a block diagram of an example mobile device.

### DETAILED DESCRIPTION OF THE DRAWINGS

The present disclosure provides for a method at an short range communications capable device for providing a dynamic credential to a terminal, the method comprising: receiving, utilizing near field communications, an application identifier from a reader associated with the terminal; computing, within a secure element of the short range communications capable device, the dynamic credential; and transmitting the dynamic credential to the reader.

The present disclosure further provides .a short range communications capable device for providing a dynamic credential to a terminal, the short range communications capable device comprising: an antenna; a controller; and at least one secure element, wherein the antenna, controller and at least one secure element are configured to: receive an application identifier from a reader associated with the terminal; compute, within a secure element of the short range communications capable device, the dynamic credential; and transmit the dynamic credential to the reader.

Communication devices may now be equipped with short range communications or proximity based communications. One example of such short range communications includes near field communications (NFC). However, other short range proximity based communications are also possible and in some cases may include Bluetooth™, ZigBee™, IrDA, among others. The present disclosure is described below with regards to NFC, but this is not meant to be limiting.

NFC capabilities in a communications device allow small data transfers over very short distances. NFC is a short range radio communications technology, typically limited in range to approximately 4cm. NFC typically allows small devices such as smart cards to interact with other devices merely by being placed in close proximity to the other device. NFC may be used in a variety of applications, including smart posters to provide a mobile device with data related to the poster, such as a uniform resource locator (URL), payment, ticketing to gain access to events or transportation, for example, access to buildings, among other applications.

In accordance with one aspect of the present disclosure, a mobile device may provide credentials to an NFC reader, whether the mobile device is in a locked state or powered up.

As used herein, an NFC tag or card is a passive device that stores data that can be read by an NFC enabled device. The terms "card" and "tag" may be used interchangeably. Examples of NFC tags include, for example, a tag embedded in a poster that will allow an NFC enabled device to obtain supplemental information such as a URL when brought into close proximity with the NFC Tag.

An "NFC enabled device" or "NFC reader", as used herein, refer to a device capable of transmitting or receiving on an NFC antenna, and are typically self powered. An NFC enabled device may operate in several modes, including a tag reading and writing mode, which may be used to read or write to passive NFC tags; a peer-to-peer mode which may be used to provide data transfer between NFC enabled devices, such as two mobile devices; and a card emulation mode which allows the NFC enabled device to act like or emulate a card or tag. Card emulation may take place even when the NFC enabled device is powered down.

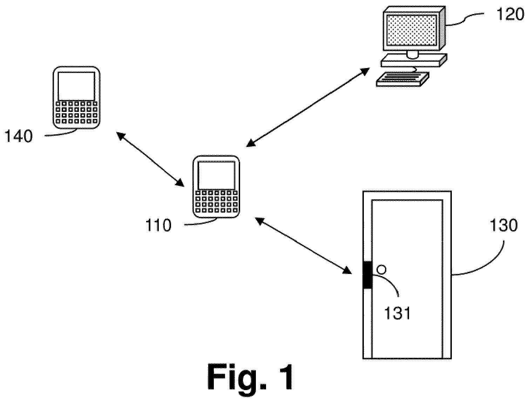

Reference is now made to **Figure 1**, which shows a mobile device **110** having NFC capabilities, as is described in detail below. The mobile device may establish radio communications with other NFC readers or NFC tags. Examples of NFC readers are shown as computing device **120,** access control NFC reader **131** and mobile device **140** in the embodiment of **Figure 1**.

Specifically, a computing device **120** such as a laptop or a desktop may have a built-in NFC reader. In other embodiments, a laptop or a desktop may connect to a peripheral NFC reader through a Universal Serial Bus (USB) port. Whether built in or peripheral, the NFC reader allows data exchange between computing device **120** and mobile device **110** using near field communications.

NFC readers may also be provided as stand-alone devices, such as NFC reader **131,** for providing access to a door **130**. In this case, mobile device **110** may be in a card emulation mode and provide a response to challenge from NFC reader **131** to permit access to door **130.** Similar embodiments would exist, for example, with a payment type system where mobile device **110** acts as a digital wallet.

In other embodiments, the NFC enabled device could be another mobile device **140** and peer-to-peer communication could occur between mobile device **110** and mobile device **140**. The near field communications could, for example, be used to exchange credentials for a higher bandwidth communications path such as Bluetooth™ to be established between the devices, in some cases.

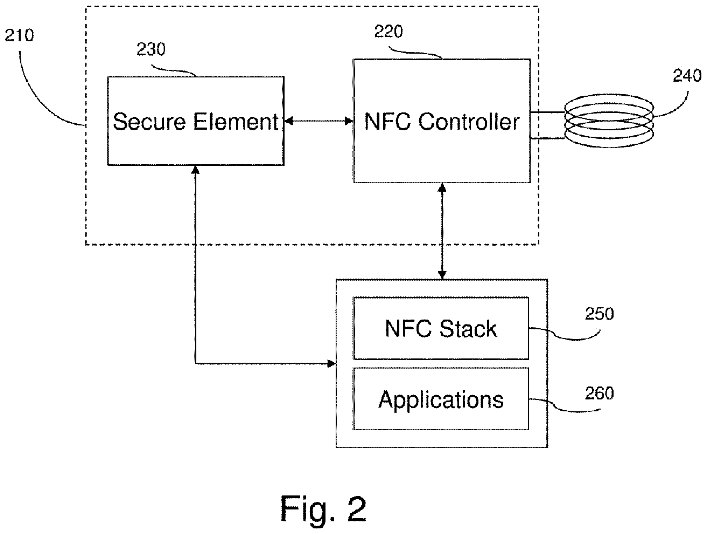

An NFC circuit may be incorporated onto a mobile device to provide NFC capabilities, and may include the following components: an NFC controller, one or more secure elements, and an NFC antenna. Reference is now made to **Figure 2**, which shows a simplified NFC circuit.

The mobile device includes an NFC circuit **210**, which comprises the NFC controller **220** and the secure element **230**.

The NFC controller **220** interfaces with the NFC antenna **240** and redirects the radio frequency (RF) communication to the secure element **230**, amongst other functionality. Typically, NFC controller **220** consists of an NFC Hardware Controller Interface (HCI) and an NFC modem. An NFC controller **220** is responsible for communication with an external NFC reader through NFC antenna **240**.

The secure element **230** consists of hardware and a smart card operating system, and is capable of running small applications known as "applets". The secure element **230** provides a secure, tamper proof environment for running applets. In at least some embodiments, regular applications on the mobile device may interact with such applets using one of the NFC Application Programming Interfaces (APIs). In some cases, applets can also interact with external components, such as NFC reader terminals.

Secure element **230** may, in some cases, be embedded within the device itself, and in other embodiments may be embedded in a universal integrated circuit card (UICC), also known as a smart card.

The NFC antenna **240** receives the RF signal from an external NFC reader (not shown). In at least some embodiments, the NFC antenna also provides power to the NFC circuit **210**. Specifically, the NFC antenna **240** may have a current induced therein when placed in proximity to the NFC reader signal.

In at least some embodiments, the mobile device further includes an NFC stack **250** for applications **260**. NFC stack **250** is a software stack which consists of a series of APIs which device applications **260** can make use of.

Applications **260** are applications which provide whatever required functionality is desired and make use of the NFC APIs for NFC use cases. In at least some embodiments, applications **260** may be written in Java™.

During operation, the NFC reader consistently transmits a signal until it receives a response from an NFC enabled device. In at least one embodiment, the signal includes a challenge, such as a random number. For example, the reader may use a protocol such as that specified by the U.S. Department of Commerce, Federal Information Processing Standards (FIPS), "ENTITY AUTHENTICATION USING PUBLIC KEY CRYPTOGRAPHY", Publication 196, Feb. 18, 1997.

Upon receiving a correct response to the challenge, the NFC reader may perform further functionality, such as granting access, receiving data or enabling data exchange from the NFC device, among other possibilities.

Using authentication as provided in the FIPS publication 196, in order to successfully respond to the challenge, the NFC device authenticates itself by proving ownership of a public/private key pair certified by a trusted authority. In other embodiments, the verification may use a shared secret or key. The shared key or private key of the public/private key pair is stored in the secure element of the NFC circuit, and the key may not be read by regular applications on the mobile device. Moreover, the public key is certified by a trusted certificate authority in one embodiment, where the public key is digitally signed by the certificate authority to form a "certificate".

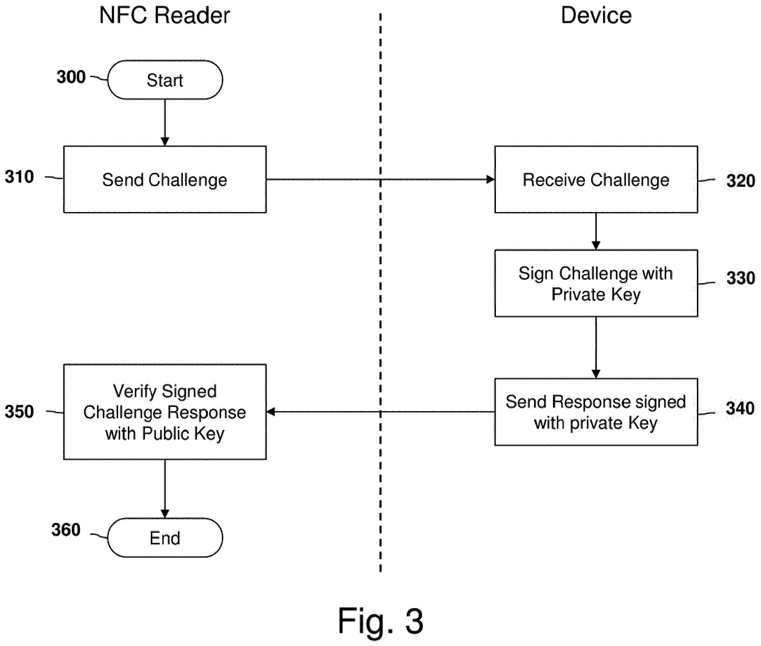

Reference is now made to **Figure 3**, which shows the above process. In particular, the process starts at block **300** and proceeds to block **310** in which the NFC reader sends out a challenge. In at least one embodiment, the NFC reader may continually or periodically send out this challenge, until it is responded to by an NFC device. In other embodiments the reader may recognize when an NFC device or tag is brought into proximity of the reader prior to sending out the challenge.

In at least one embodiment, the challenge consists of a random number generated by the NFC reader. In at least one embodiment, the challenge further includes an application identifier, for identifying at least one application for the NFC reader (terminal). The application identifier may originate at the terminal and be propagated through the NFC reader in one embodiment.

The NFC device receives the challenge at block **320** and, if applicable, determines the application identifier. At block **330**, the NFC device signs the random number challenge with a key. In at least some embodiments, the key is associated to the application identifier.

At block **340**, the NFC device sends the signed random number challenge to the NFC reader along with a device identifier, the device's public key and a public key certificate. At block **350**, the NFC reader verifies that the public key belongs to the device by checking the public key certificate and the device identifier, and decrypts the signed challenge with the public key to authenticate the NFC device. Once the NFC device is authenticated, the procedure ends at block **350**.

In accordance with one embodiment of the present disclosure, the above may be modified to facilitate two factor authentication for secure login, such as for accessing a Virtual Private Network (VPN) or the like. Two factor authentication consists of granting access to a network by requiring two inputs from a user. For example, two factor authentication may use two different categories of factors, from the following: something the user knows; something the user has; or something the user is.

In the example described below, two factor authentication is based on a dynamic credential which may change periodically, such as every minute or every hour, i.e., something the user has and a constant password or Personal Identification Number (PIN), i.e., something the user knows. However the present disclosure is not so limited. Notably, the dynamic credential is deemed to be something the user has, because the user is be in possession of a device which provides the dynamic credential to know the current credential. One example of two factor authentication utilizes an RSA SecurlD™ system, where the user is required to input a six to eight digit dynamic number as part of the login from a device or fob.

For example, users of certain networks require a device such as a key fob, which computes a new access code periodically. Typically, the access code changes every 30 seconds or every minute according to an algorithm which is executed at the key fob and at a server location. Accordingly the access code computed by the key fob and the access code computed by the server location remain synchronized.

When logging in to the network, the user enters both a password/PIN, as well as the access code which is currently displayed by the key fob. If the password/PIN is correct and the access code is the correct current access code, the user is granted access. In the following disclosure, an access code which changes periodically is referred to as a "dynamic credential".

According to one embodiment of the present disclosure, a mobile device with NFC capabilities may be used to provide the dynamic credential to a terminal. In some embodiments, this may be accomplished by having the NFC circuit on the mobile device include an applet within the secure element to generate the dynamic credential. Specifically, the reader could provide an application identifier that would cause the applet to be invoked to return the dynamic credential. If the NFC on the mobile device was operating in a card emulation mode, the applet could be completely within the secure element and not require external application support. Further, the NFC controller running the applet could be completely powered through an induced current from the reader and thus the dynamic credential could be returned even if no power was supplied from the mobile device.

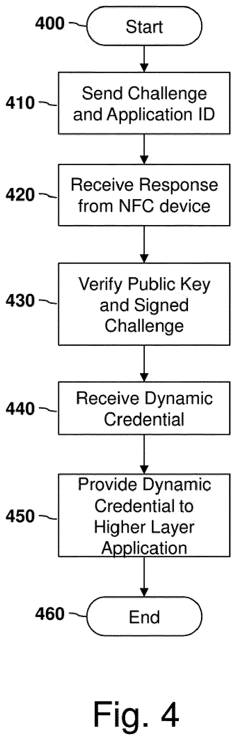

The above is described, from the point of view of the NFC reader, with reference to **Figure 4**. The NFC reader performing the method of **Figure 4** is connected to a terminal for logging into a computing device or network requiring two factor authentication. For example, the NFC reader may be connected to a laptop or desktop computer via a USB port, or may be built-in to the laptop or desktop. The network may be a remote VPN or a Local Area Network (LAN).

The method starts at block **400** and proceeds to block **410** in which the NFC reader of the computing device sends a challenge (e.g. a random number) with an application ID. In at least some embodiments, the challenge is a random number generated by the NFC reader and the application ID indicates that a value is required for a two factor authentication login. The NFC reader may detect a device in proximity and send a challenge after detection in one embodiment.

At block **420**, the NFC reader receives a response from an NFC device. The response includes a device identifier, the random number signed by the NFC device's key, (e.g. private key), and optionally the corresponding public key, and a certificate from a trusted authority. Alternatively, instead of receiving the public key, the NFC reader could use a device identifier to fetch a certificate to see if the signature is accurate.

At block **430**, the NFC reader may verify that the public key belongs to the NFC device, for example based on the device identifier and the public key certificate. If the verification fails, the method ends. The NFC reader also verifies that the public key correctly decrypts the signed random number. If this verification fails, the method ends, otherwise the NFC reader is ready to exchange data with the NFC device. In at least some embodiments, the NFC reader sends a signal to the NFC device indicating that authentication was successful.

The method than proceeds to block **440**, in which the NFC reader receives a dynamic credential from the NFC device. In at least some embodiments, the dynamic credential is included in the response of block **420** in a payload field, however in other embodiments, the dynamic credential is provided in a separate communication.

At block **450**, the NFC reader provides the dynamic credential to a higher layer application. At this point, the method, from the perspective of the NFC reader, ends, and the user may resume logging in to the network. The dynamic credential will be verified by a server, computing device or other network element before access is granted.

From block **450** the process proceeds to block **460** and ends.

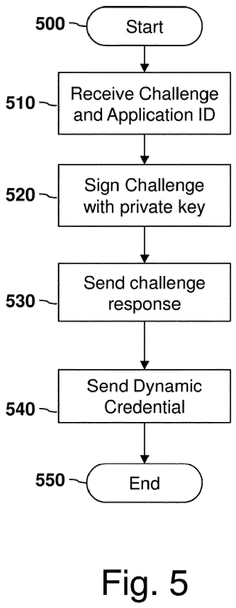

Reference is now made to **Figure 5**, which describes the above method from the perspective of the NFC device.

The method starts at block **500** and proceeds to block **510** in which the NFC device receives a challenge and an application ID. As described above, the NFC reader may only transmit the challenge and the application ID when a device is brought into close proximity, or in some embodiments may continuously broadcast a challenge and an application ID. In either case, as the NFC device is brought in proximity to the NFC reader, the NFC device reads the RF signal from the NFC reader and decodes it as a challenge and an application ID. In some embodiments, the field from the NFC reader may power the NFC device.

Notably, the NFC device may read the broadcast from the NFC reader even if the NFC device is powered off, or in a locked state. Specifically, even if no power is provided to the NFC circuit **210** (see **Figure 2**) of the NFC device from a battery, the electromagnetic field propagated by the NFC reader will induce a current in the NFC antenna **240** (see **Figure 2**). This current is sufficient to power the NFC controller **220** and the secure element **230**, allowing the method of **Figure 5** to be performed even when the NFC device is powered off.

Upon detecting the challenge and the application ID, the NFC controller 220 loads an applet corresponding to the application ID. In this example, the corresponding applet is a two factor authentication applet because the application ID indicates two factor authentication. The applet is then executed on the secure element **230**.

The authentication procedure is then performed. In at least some embodiments, the authentication procedure is handled by the two factor authentication applet. In other embodiments, the authentication procedure is handled by the NFC controller **220**.

The NFC device retrieves its private key, and signs the random number with its private key at block **520**. In at least some embodiments, the private key belongs to a public/private key pair which is associated to the two factor authentication applet. In other embodiments, the private key belongs to a general public/private key pair associated to the NFC device. In other embodiments, the key could be a secret key shared by the NFC reader/terminal and the NFC-capable device.

The NFC device then sends a device identifier, the signed random number challenge, and optionally the public key, and a certificate in block **530**. As would be appreciated by those skilled in the art, if public key/private key cryptography is used, the public key corresponds to the private key used to sign the random number challenge, and the certificate shows that the public key belongs to the device associated to the device identifier. In at least some embodiments, the public key certificate is issued by a trusted authority.

The two factor authentication applet may then read the current dynamic credential. In at least some embodiments, the current dynamic credential is computed by the two factor authentication applet from the current time. However, other methods of computing the current dynamic credential are within the scope of the present disclosure. In some cases some battery power may be needed to allow a clock to run to seed the dynamic credential at the NFC device.

When the dynamic credential is based on the current time, the current time may be obtained from the NFC reader. Alternatively, the mobile device may include a timer circuit, powered by a dedicated battery or the device battery, to provide the applet the current time when required. Such timer circuit may be synchronized periodically, for example with a network clock when the mobile device is powered up. As would be appreciated by those skilled in the art, a timer circuit such as this would consume very little power, and could be powered by a small dedicated battery or the device battery, and could therefore function even if the processor or processors of mobile device are powered off.

The two factor authentication applet then transmits the current dynamic credential to the NFC reader by invoking the NFC controller **220**, at block **540**. In at least some embodiments, the current dynamic credential is provided in the response to the challenge in a payload field. In other embodiments, the current dynamic credential is provided in a separate communication. Furthermore, in at least some embodiments, the NFC device waits for a confirmation that authentication was successful before sending the current dynamic credential.

After block **540**, the method ends at block **550**.

While the embodiments of **Figures 4** and **5** use a challenge and private key/public key pair to verify the device prior to providing the dynamic credential, in other embodiments the device could provide the dynamic credential without such device verification. Thus, the device could merely receive an application identifier in an NFC request, and based on the application identifier provide a dynamic credential. In this case, the algorithm used to create the dynamic credential may be designed appropriately to ensure security.

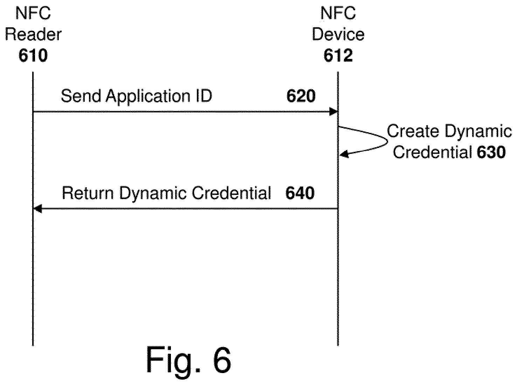

For example, reference is made to **Figure 6**. In the embodiment of **Figure 6**, NFC reader **610** communicates with an NFC device **612**. The communication may occur, for example, when NFC device **612** comes into close proximity to NFC reader **610**.

NFC reader **610** continuously broadcasts an application ID in the embodiment of **Figure 6**, as shown by arrow **620**. However, in other embodiments the message at arrow **620** could be sent in response to the NFC device 612 coming into close proximity to NFC reader **610**. Once the NFC device **612** receives the application ID, it invokes the applet corresponding to the application ID to create a dynamic credential, as shown by arrow **630**. Again, the dynamic credential could be created based on a time, in which case a clock value may need to be accessed by the applet.

The NFC device **612** then returns the dynamic credential to NFC reader **610**, as shown by arrow **640**.

In one embodiment the credential is returned without any encryption.

In other embodiments the credential may be returned utilizing a key stored at the NFC device. If the credential is encrypted, then the NFC reader **610** will need to decrypt the credential utilizing a key associated with the device's key. For example, the reader may send a public key to the device to use for encryption, wherein the reader then uses a private key to decrypt the credential. In other cases, the key is a shared secret between the reader and the device. In some embodiments, the device may also return an identifier to allow the reader to associate the correct key with the device.

Other examples of returning a dynamic credential to an NFC reader are possible.

The applet used to create the dynamic credential is part of the secure element to allow the applet to run even without device power. The applet may be loaded onto the secure element at the time of device manufacture, or may subsequently be loaded onto the device. Security for the loading of applets into secure elements could limit such loading to trusted entities.

Accordingly, there is provided a method and device for providing a dynamic credential in a two factor authentication system using an NFC device. The NFC device can provide the dynamic credential to an NFC reader by bringing the NFC device in close proximity to the NFC reader, even if the NFC device is turned off or in a locked state. This saves a user from having to input the dynamic credential manually and streamlines the authentication process.

In at least some embodiments, the NFC device is a mobile device having the NFC hardware as shown in **Figure 2**. In other embodiments, the NFC device is a stand alone NFC device with no additional functionality or hardware than as described herein.

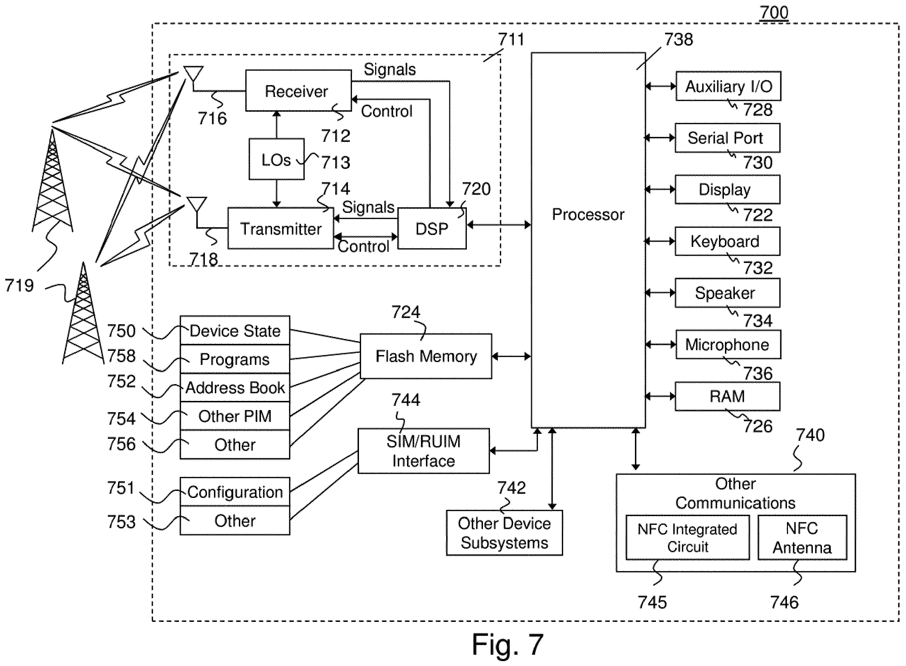

If the above is implemented on a mobile device, it may be implemented using any mobile device having NFC capability. One exemplary device is described below with regard to **Figure 7**. The example of **Figure 7** is however not limiting, and other devices can be used.

Mobile device **700** is typically a two-way wireless communication device having voice and data communication capabilities. Mobile device **700** generally has the capability to communicate with other computer systems on the Internet. Depending on the exact functionality provided, the mobile device may be referred to as a data messaging device, a two-way pager, a wireless e-mail device, a cellular telephone with data messaging capabilities, a wireless Internet appliance, a wireless device, a mobile device, or a data communication device, as examples.

Where mobile device **700** is enabled for two-way communication, it may incorporate a communication subsystem **711**, including both a receiver **712** and a transmitter **714**, as well as associated components such as one or more antenna elements **716** and **718**, local oscillators (LOs) **713**, and a processing module such as a digital signal processor (DSP) **720**. As will be apparent to those skilled in the field of communications, the particular design of the communication subsystem **711** will be dependent upon the communication network in which the device is intended to operate. The radio frequency front end of communication subsystem **711** can be any of the embodiments described above.

Network access requirements will also vary depending upon the type of network **719**. In some networks network access is associated with a subscriber or user of mobile device **700**. A mobile device may require a removable user identity module (RUIM) or a subscriber identity module (SIM) card in order to operate on a network. The SIM/RUIM interface **744** is normally similar to a card-slot into which a SIM/RUIM card can be inserted and ejected. The SIM/RUIM card can have memory and hold many key configurations **751**, and other information **753** such as identification, and subscriber related information.

When required network registration or activation procedures have been completed, mobile device **700** may send and receive communication signals over the network **719.** As illustrated in **Figure 7****,** network **719** can consist of multiple base stations communicating with the mobile device.

Signals received by antenna **716** through communication network **719** are input to receiver **712**, which may perform such common receiver functions as signal amplification, frequency down conversion, filtering, channel selection and the like. A/D conversion of a received signal allows more complex communication functions such as demodulation and decoding to be performed in the DSP **720.** In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718**. DSP **720** not only processes communication signals, but also provides for receiver and transmitter control. For example, the gains applied to communication signals in receiver **712** and transmitter **714** may be adaptively controlled through automatic gain control algorithms implemented in DSP **720**.

Mobile device **700** generally includes a processor **738** which controls the overall operation of the device. Communication functions, including data and voice communications, are performed through communication subsystem **711**. Processor **738** also interacts with further device subsystems such as the display **722**, flash memory **724**, random access memory (RAM) **726**, auxiliary input/output (I/O) subsystems **728**, serial port **730**, one or more keyboards or keypads **732**, speaker **734**, microphone **736**, other communication subsystem **740** such as a short-range communications subsystem and any other device subsystems generally designated as **742**. Serial port **730** could include a USB port or other port known to those in the art.

In particular, the other communication subsystem **740** includes a near field communication (NFC) system, comprising an NFC circuit **745** and NFC antenna **746**. The NFC communication system is described in greater detail above with reference to **Figure 2**.

Some of the subsystems shown in **Figure 7** perform communication-related functions, whereas other subsystems may provide "resident" or on-device functions. Notably, some subsystems, such as keyboard **732** and display **722**, for example, may be used for both communication-related functions, such as entering a text message for transmission over a communication network, and device-resident functions such as a calculator or task list.

Operating system software used by the processor **738** may be stored in a persistent store such as flash memory **724**, which may instead be a read-only memory (ROM) or similar storage element (not shown). Those skilled in the art will appreciate that the operating system, specific device applications, or parts thereof, may be temporarily loaded into a volatile memory such as RAM **726**. Received communication signals may also be stored in RAM **726**.

As shown, flash memory **724** can be segregated into different areas for both computer programs **758** and program data storage **750**, **752**, **754** and **756**. These different storage types indicate that each program can allocate a portion of flash memory **724** for their own data storage requirements. Processor **738**, in addition to its operating system functions, may enable execution of software applications on the mobile device. A predetermined set of applications that control basic operations, including at least data and voice communication applications for example, will normally be installed on mobile device **700** during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application may have the ability to send and receive data items, via the wireless network **719**. Further applications may also be loaded onto the mobile device **700** through the network **719**, an auxiliary I/O subsystem **728**, serial port **730**, short-range communications subsystem **740** or any other suitable subsystem **742**, and installed by a user in the RAM **726** or a non-volatile store (not shown) for execution by the processor **738**. Such flexibility in application installation increases the functionality of the device and may provide enhanced on-device functions, communication-related functions, or both. For example, secure communication applications may enable electronic commerce functions and other such financial transactions to be performed using the mobile device **700**.

In a data communication mode, a received signal such as a text message or web page download will be processed by the communication subsystem **711** and input to the processor **738**, which may further process the received signal for output to the display **722**, or alternatively to an auxiliary I/O device **728**.

A user of mobile device **700** may also compose data items such as email messages for example, using the keyboard **732,** which may be a complete alphanumeric keyboard or telephone-type keypad, among others, in conjunction with the display **722** and possibly an auxiliary I/O device **728**. Such composed items may then be transmitted over a communication network through the communication subsystem **711**.

For voice communications, overall operation of mobile device **700** is similar, except that received signals would typically be output to a speaker **734** and signals for transmission would be generated by a microphone **736**. Alternative voice or audio I/O subsystems, such as a voice message recording subsystem, may also be implemented on mobile device **700**. Although voice or audio signal output is generally accomplished primarily through the speaker **734**, display **722** may also be used to provide an indication of the identity of a calling party, the duration of a voice call, or other voice call related information for example.

Serial port **730** in **Figure 7** would normally be implemented in a personal digital assistant (PDA)-type mobile device for which synchronization with a user's desktop computer (not shown) may be desirable, but is an optional device component. Such a port **730** would enable a user to set preferences through an external device or software application and would extend the capabilities of mobile device **700** by providing for information or software downloads to mobile device **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem or to a power source for charging.

Other communications subsystems **740**, such as a short-range communications subsystem, is a further optional component which may provide for communication between mobile device **700** and different systems or devices, which need not necessarily be similar devices. For example, the subsystem **740** may include an infrared device and associated circuits and components or a Bluetooth™ communication module to provide for communication with similarly enabled systems and devices. Subsystem **740** may further include non-cellular communications such as WiFi or WiMAX.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a short range communications capable device (612) for providing a dynamic credential to a terminal for controlling access to a resource, the method comprising:
receiving (320, 510, 620), utilizing near field communications, an application identifier, a current time, and a random number from a reader (610) associated with the terminal;
retrieving an encryption key, the encryption key corresponding to the application identifier;
transmitting (340), to the terminal, a response including a device identifier and the random number signed with the encryption key (340, 520, 530);
executing an applet on a secure element (230) of the short range communications capable device, the applet corresponding to the application identifier;
computing (630), with the applet within a secure element of the short range communications capable device, the dynamic credential based on the current time; and
transmitting (540, 640) the dynamic credential to the reader (610); wherein access to the resource is provided upon transmitting a valid dynamic credential and a valid signature corresponding to the signed random number.

2. The method of claim 1, wherein the application identifier indicates two factor authentication.

3. The method of any one of claims 1 to 2, wherein the dynamic credential is updated periodically.

4. The method of claim 1, wherein the short range communications capable device includes a powered timer circuit.

5. The method of any one of claims 1 to 4, wherein the short range communications capable device is a near field communications (NFC) capable device, including an NFC subsystem (210) powered by induction when placed in proximity to the reader.

6. The method of claim 1, wherein the encryption key is stored in the secure element of the short range communications capable device.

7. The method of claim 1 or claim 6, further comprising receiving an indication at the short range communications capable device, that authentication was successful.

8. The method of any one of claims 1 to 7, wherein the response includes the dynamic credential in a payload field.

9. The method of any one of claims 1 to 8, wherein the dynamic credential is for a login to a network requiring two factor authentication.

10. The method of any one of claims 1 to 9 wherein the short range communications capable device is one of a mobile communications device, or a dedicated dynamic credential providing device.

11. A short range communications capable device (612) for providing a dynamic credential to a terminal, the short range communications capable device comprising:
an antenna (240);
a controller (220); and
at least one secure element (230),
wherein the antenna (240), controller (220) and at least one secure element (230) are configured to perform the method of any one of claims 1 to 10.

## Patentansprüche

1. Verfahren zur Bereitstellung eines dynamischen Berechtigungsnachweises an ein Endgerät zum Steuern eines Zugriffs auf eine Ressource an einer nahbereichskommunikationsfähigen Vorrichtung (612), wobei das Verfahren umfasst:
Empfangen (320, 510, 620) einer Anwendungskennung, einer aktuellen Zeit und einer Zufallsnummer von einem Lesegerät (610), das mit dem Endgerät assoziiert ist, unter Nutzung von Nahfeldkommunikationen;
Abrufen eines Verschlüsselungsschlüssels, wobei der Verschlüsselungsschlüssel der Anwendungskennung entspricht;
Übertragen (340) einer Antwort, die eine Vorrichtungskennung und die Zufallsnummer umfasst, die mit dem Verschlüsselungsschlüssel signiert wurde (340, 520, 530), an das Endgerät;
Ausführen eines Applets auf einem sicheren Element (230) der nahbereichskommunikationsfähigen Vorrichtung, wobei das Applet der Anwendungskennung entspricht;
Berechnen (630) des dynamischen Berechtigungsnachweises auf der Basis der aktuellen Zeit mit dem Applet innerhalb eines sicheren Elements des nahbereichskommunikationsfähigen Vorrichtung und
Übertragen (540, 640) des dynamischen Berechtigungsnachweises an das Lesegerät (610);
wobei ein Zugriff auf die Ressource bei Übertragen eines gültigen dynamischen Berechtigungsnachweises und einer gültigen Signatur, die der signierten Zufallsnummer entspricht, bereitgestellt wird.

2. Verfahren nach Anspruch 1, wobei die Anwendungskennung eine Zwei-Faktor-Authentifizierung angibt.

3. Verfahren nach einem der Ansprüche 1 bis 2, wobei der dynamische Berechtigungsnachweis periodisch aktualisiert wird.

4. Verfahren nach Anspruch 1, wobei die nahbereichskommunikationsfähige Vorrichtung eine mit Energie versorgte Zeitgeberschaltung umfasst.

5. Verfahren nach einem der Ansprüche 1 bis 4, wobei die nahbereichskommunikationsfähige Vorrichtung eine nahfeldkommunikationsfähige (NFC-fähige) Vorrichtung ist, die ein NFC-Subsystem (210), umfasst, das durch Induktion angetrieben wird, wenn es in der Nähe des Lesegeräts angeordnet wird.

6. Verfahren nach Anspruch 1, wobei der Verschlüsselungsschlüssel in dem sicheren Element der nahbereichskommunikationsfähigen Vorrichtung gespeichert ist.

7. Verfahren nach Anspruch 1 oder 6, das ein Empfangen einer Angabe an der nahbereichskommunikationsfähigen Vorrichtung, dass die Authentifizierung erfolgreich war, umfasst.

8. Verfahren nach einem der Ansprüche 1 bis 7, wobei die Antwort den dynamischen Berechtigungsnachweis in einem Nutzlastfeld umfasst.

9. Verfahren nach einem der Ansprüche 1 bis 8, wobei der dynamische Berechtigungsnachweis für eine Anmeldung an einem Netzwerk ist, das eine Zwei-Faktor-Authentifizierung erfordert.

10. Verfahren nach einem der Ansprüche 1 bis 9, wobei die nahbereichskommunikationsfähige Vorrichtung eine von einer Mobilkommunikationsvorrichtung oder einer dedizierten, einen Berechtigungsnachweis bereitstellenden Vorrichtung ist.

11. Nahbereichskommunikationsfähige Vorrichtung (612) zur Bereitstellung eines dynamischen Berechtigungsnachweises an ein Endgerät, wobei die nahbereichskommunikationsfähige Vorrichtung umfasst:
eine Antenne (240);
eine Steuereinheit (220) und
mindestens ein sicheres Element (230),
wobei die Antenne (240), die Steuereinheit (220) und das mindestens eine sichere Element (230) dazu konfiguriert sind, das Verfahren nach einem der Ansprüche 1 bis 10 durchzuführen.

## Revendications

1. Procédé au niveau d'un dispositif capable de communications à courte portée (612) pour fournir un justificatif d'identité dynamique à un terminal pour contrôler l'accès à une ressource, le procédé comprenant :
recevoir (320, 510, 620), par utilisation de communications en champ proche, un identificateur d'application, une heure actuelle et un nombre aléatoire à partir d'un lecteur (610) associé au terminal ;
extraire une clé de chiffrement, la clé de chiffrement correspondant à l'identificateur d'application ;
transmettre (340), au terminal, une réponse comprenant un identificateur de dispositif et le nombre aléatoire signé avec la clé de chiffrement (340, 520, 530) ;
exécuter une appliquette sur un élément sécurisé (230) du dispositif capable de communications à courte portée, l'appliquette correspondant à l'identificateur d'application ;
calculer (630), au moyen de l'appliquette dans un élément sécurisé du dispositif capable de communications à courte portée, le justificatif d'identité dynamique sur la base de l'heure actuelle ; et
transmettre (540, 640) le justificatif d'identité dynamique au lecteur (610) ;
l'accès à la ressource étant permis lors de la transmission d'un justificatif d'identité dynamique valide et d'une signature valide correspondant au nombre aléatoire signé.

2. Procédé selon la revendication 1, dans lequel l'identificateur d'application indique une authentification à deux facteurs.

3. Procédé selon l'une quelconque des revendications 1 à 2, dans lequel le justificatif d'identité dynamique est mis à jour périodiquement.

4. Procédé selon la revendication 1, dans lequel le dispositif capable de communications à courte portée comprend un circuit de temporisateur alimenté.

5. Procédé selon l'une quelconque des revendications 1 à 4, dans lequel le dispositif capable de communications à courte portée est un dispositif capable de communications en champ proche (NFC), comprenant un sous-système NFC (210) alimenté par induction lorsqu'il est placé à proximité du lecteur.

6. Procédé selon la revendication 1, dans lequel la clé de chiffrement est stockée dans l'élément sécurisé du dispositif capable de communications à courte portée.

7. Procédé selon la revendication 1 ou la revendication 6, comprenant en outre la réception d'une indication au niveau du dispositif capable de communications à courte portée, selon laquelle l'authentification a été réussie.

8. Procédé selon l'une quelconque des revendications 1 à 7, dans lequel la réponse comprend le justificatif d'identité dynamique dans un champ de données utiles.

9. Procédé selon l'une quelconque des revendications 1 à 8, dans lequel le justificatif d'identité dynamique est destiné à une connexion à un réseau requérant une authentification à deux facteurs.

10. Procédé selon l'une quelconque des revendications 1 à 9, dans lequel le dispositif capable de communications à courte portée est l'un parmi un dispositif de communication mobile ou un dispositif de fourniture de justificatif d'identité dynamique dédié.

11. Dispositif capable de communications à courte portée (612) pour fournir un justificatif d'identité dynamique à un terminal, le dispositif capable de communications à courte portée comprenant :
une antenne (240) ;
un dispositif de commande (220) ; et
au moins un élément sécurisé (230),
l'antenne (240), le dispositif de commande (220) et l'au moins un élément sécurisé (230) étant configurés pour réaliser le procédé selon l'une quelconque des revendications 1 à 10.
